# EUROPÄISCHE PATENTSCHRIFT

(11) **EP 3 742 604 B1**
(45) Veröffentlichungstag und Bekanntmachung des Hinweises auf die Patenterteilung: **09.11.2022**
(21) Anmeldenummer: 20174374.7
(22) Anmeldetag: 13.05.2020
(51) Int. Cl.: H02S 40/42

(54) **SOLARMODUL**
SOLAR MODULE
MODULE SOLAIRE

(30) Priorität: 24.05.2019 DE 102019113956
(43) Veröffentlichungstag der Anmeldung: 25.11.2020
(73) Patentinhaber: Solvis GmbH, 38112 Braunschweig (DE)
(72) Erfinder: Jäger, Helmut, 38533 Vordorf (DE)
(74) Vertreter: Gramm, Lins & Partner Patent- und Rechtsanwälte PartGmbB

(56) Entgegenhaltungen:
- AT-B1- 516 573
- CN-B- 106 803 737
- DE-A1-102010 037 500
- DE-B4-102011 122 126
- DE-U1-202007 016 964
- DE-U1-202010 016 159

## Beschreibung

Die Erfindung betrifft ein Solarmodul mit wenigstens einem Photovoltaikelement, wenigstens einer Wärmeleitschicht, die mit dem wenigstens einen Photovoltaikelement in thermischem Kontakt steht, und wenigstens einer Kühlleitung, die mit der wenigstens einen Wärmeleitschicht in thermischen Kontakt steht.

Ein gattungsgemäßes Solarmodul ist beispielsweise aus der DE 20 2010 016 159 U1 bekannt.

Solarmodule in Form von Photovoltaikelementen sind aus dem Stand der Technik seit langem bekannt. Sie werden verwendet, um elektromagnetische Strahlung in elektrischem Strom zu überführen. Dazu werden sie oftmals auf Dächern angeordnet, die vorzugsweise nach Süden ausgerichtet sind, um eine möglichst große Strahlungsmenge umwandeln zu können. Dabei erwärmen sich die Photovoltaikelement, wodurch ihr Wirkungsgrad sinkt, also die Menge des erzeugten elektrischen Stromes aus einer gegebenen Menge elektromagnetischer Strahlung zurückgeht. Um dies zu verhindern, ist es aus dem Stand der Technik bekannt, Photovoltaikelement und Solarmodule mit diesen Photovoltaikelementen zu kühlen. Dadurch wird nicht nur der Wirkungsgrad des Photovoltaikelement möglichst hoch gehalten, sondern die abgeführte Wärme kann als Nutzwärme, beispielsweise bei der Erwärmung von Trinkwasser oder Heizungswasser, verwendet werden.

Zum Kühlen des Solarmoduls oder zumindest dessen Photovoltaikelementes wird oftmals ein Kühlmittel verwendet, das durch wenigstens eine Kühlleitung, die mit dem Photovoltaikelement, zumindest jedoch mit der Wärmeleitschicht, in thermischem Kontakt steht, geleitet. Um einen möglichst guten thermischen Kontakt zu erreichen, und Wärme von möglichst der gesamten Rückseite des Photovoltaikelement des ableiten zu können, wird die Wärmeleitschicht verwendet. Dabei handelt es sich beispielsweise im Stand der Technik um eine Metallplatte, beispielsweise aus Aluminium, die mit der Rückseite des Photovoltaikelementes in möglichst gutem Kontakt steht. Dazu wird die Metallplatte beispielsweise vollflächig an die Rückseite des Photovoltaikelementes geklebt. An dieser Metallplatte wird die wenigstens eine Kühlleitung, die bevorzugt aus Kupfer besteht, befestigt, was beispielsweise durch Schweißen geschieht. Dabei wird die wenigstens eine Kühlleitung entlang einer Reihe von Schweißpunkten an der Metallplatte befestigt.

Nachteilig ist, dass das Photovoltaikelement, die als Wärmeleitschicht wirkende Metallplatte und die wenigstens eine Kühlleitung aus unterschiedlichen Materialien bestehen, die deutlich unterschiedliche Wärmeausdehnungskoeffizienten aufweisen. Da Photovoltaikelement und Solarmodule sehr großen Temperaturschwankungen ausgesetzt sein können, führen diese Wärmeausdehnungskoeffizienten dazu, dass die Verbindung zwischen der Wärmeleitschicht und dem Photovoltaikelement aufgrund der auftretenden starken mechanischen Spannungen reißen oder sich lösen kann. In diesem Fall ist auch der thermische Kontakt nicht mehr ausreichend vorhanden, sodass der Wärmeübergangswiderstand höher wird und der Nutzungsgrad sinkt.

Um dies zu verhindern ist beispielsweise aus der DE 10 2011 122 126 B4 bekannt, die wenigstens eine Wärmeleitschicht in Form der Metallplatte über Andruckelemente, die aus Federstahl hergestellt werden, an das wenigstens eine Photovoltaikelement anzupressen. Dadurch wird das Solarmodul konstruktiv aufwendiger und schwerer. Zudem wird das Problem der verschiedenen Wärmeausdehnungskoeffizienten nicht gelöst.

Aus der AT 516 573 B1 und der AT 516 574 B1 sind Solarmodule bekannt, bei denen die Wärmeleitschicht in Form einer Vielzahl von schmalen Metallstreifen ausgebildet ist, die einzeln an der jeweiligen Kühlleitung angeordnet sind. Die Metallstreifen sind dabei in Richtung auf das Photovoltaikelement gebogen, sodass sie bei der Montage mit diesem Photovoltaikelement in Kontakt kommen und elastisch verformt werden. Die dabei entstehende mechanische Spannung innerhalb der Metallstreifen sorgt dafür, dass der Kontakt zwischen den Metallstreifen und dem Photovoltaikelement auch bei langer Standzeit vorhanden ist. Nachteilig ist jedoch, dass die Wärmeleitschicht sehr kompliziert ausgebildet und nur mit großem Aufwand herstellbar ist, da die Metallstreifen einzeln hergestellt und bevorzugt unregelmäßig einzeln an der wenigstens einen Kühlleitung befestigt werden müssen.

Aus der DE 10 2007 037 500 A1 ist ein Fotovoltaikmodul bekannt, an dem rückseitig Absorberrohre angeordnet sind, die formschlüssig in ein Absorberblech eingebettet sind.

Die DE 20 2007 016 964 U1 beschreibt eine Luftabsorber-Solarkollektor-Kombination für Wärmepumpen. Der Luftabsorber ist als zu dem Solarkollektor separate Anlage ausgebildet und an deren Unterseite befestigt. Er weist eigene Wärmeträgerfluidrohre auf, die von einem als Streckmetall ausgebildeten Wärmeleitkörper zumindest teilweise umschlossen sind. Die Wärmeträgerfluidrohre bilden einen zu dem Solarkollektor separaten Fluidkreislauf.

Die DE 100 48 032 C1 beschreibt ein Solar-Dacheindeckungselement mit einem flexiblen Solarlaminat, das mit einem, beispielsweise als Dachschare ausgebildeten, Blech verklebt ist. Zwischen dem Blech und dem Solarlaminat sind insbesondere zwei Klebstoffschichten angeordnet, die voneinander über eine Metallfolie getrennt sind. Gemäß einer Ausführungsform ist diese Metallfolie als Streckmetall ausgebildet, wodurch es möglich sei, nur eine Klebstoffschicht zu verwenden.

Die US 2014/0261633 A1 beschreibt eine photothermale Stromgewinnungsvorrichtung mit einer thermalen Kollektoreinheit. Dies kann eine Rohrschlange aufweisen, wobei die Rohrschlange im Querschnitt oblong ausgebildet ist.

Der Erfindung liegt daher die Aufgabe zugrunde, ein Solarmodul so weiterzuentwickeln, dass die Nachteile aus dem Stand der Technik behoben oder zumindest abgemildert werden. Die Erfindung löst die gestellte Aufgabe durch ein Solarmodul gemäß dem Oberbegriff des Anspruchs 1, das sich dadurch auszeichnet, dass die wenigstens eine Wärmeleitschicht wenigstens ein metallisches Streckgitter mit einer Mehrzahl von Löchern aufweist.

Ein Streckgitter, das auch als Streckmetall bekannt ist, ist ein Werkstoff, der eine Mehrzahl von Löchern in der Oberfläche aufweist, die durchversetzte Schnitte vorzugsweise ohne Materialverlust unter gleichzeitiger streckender Verformung entstehen. Insbesondere durch eine entsprechende Stanzung bei der Herstellung des Streckgitters entsteht eine dreidimensionale Struktur, durch die sowohl eine flächige Verformung durch Wärmeeinwirkung als auch eine räumliche Ausdehnung möglich ist. Durch die vielen Löcher, die das Streckgitter aufweist, ändern sich die Gesamtmaße des Streckgitters bei Erwärmung oder Abkühlung nur wenig, da die Wärmeausdehnung im Wesentlichen durch eine Veränderung der Form und/oder der Größe der Löcher aufgefangen wird. Die mechanischen Spannungen, die bei Wärmeleitschichten gemäß dem Stand der Technik auftreten, wenn diese vollflächig mit den Photovoltaikelement verbunden werden, treten bei der erfindungsgemäßen Lösung daher nicht oder nur in stark abgeschwächter Form auf. Dadurch bleibt neben dem mechanischen Kontakt insbesondere auch der thermische Kontakt zwischen der Wärmeleitschicht und dem Photovoltaikelement auch bei langer Standzeit des Solarmoduls und vielen Temperaturzyklen aus starker Temperaturerhöhung und Temperatursenkung bestehen.

In einer bevorzugten Ausgestaltung des Solarmoduls verfügt das wenigstens eine Streckgitter über eine Dicke von mindestens 0,5 mm, bevorzugt mindestens 0,6 mm, besonders bevorzugt mindestens 0,75 mm. Je dicker das Streckgitter ausgebildet ist, desto dicker ist folglich die wenigstens eine Wärmeleitschicht, wodurch die Wärmeleitfähigkeit der Wärmeleitschicht vergrößert wird. Dadurch wird die im Photovoltaikelement entstehende Wärme besser abgeführt und der Wirkungsgrad des Photovoltaikelementes erhöht.

Vorzugsweise ist die wenigstens eine Wärmeleitschicht an dem wenigstens einen Photovoltaikelement angeklebt. Dies geschieht am besten, indem das Streckgitter an dem Photovoltaikelement angeklebt wird. Dies geschieht bevorzugt nicht vollflächig, um die Menge an verwendetem Klebstoff möglichst klein zu halten. Selbst verständlich ist auch eine vollflächige Verklebung des Streckgitters an dem Photovoltaikelement möglich. Bevorzugt wird dabei ein flächiger Kleber oder ein Transferkleber verwendet.

Bevorzugt ist die wenigstens eine Kühlleitung zumindest abschnittsweise zwischen dem wenigstens einen Photovoltaikelement und der wenigstens einen Wärmeleitschicht angeordnet. Dabei ist die wenigstens eine Kühlleitung zumindest abschnittsweise zwischen dem Photovoltaikelement und dem Streckgitter positioniert. Diese Ausgestaltung hat mehrere Vorteile. Durch diese Positionierung der Kühlleitung wird die Kühlleitung durch das Streckgitter an dem Photovoltaikelement gehalten, sodass zusätzliche Fertigungsschritte, wie beispielsweise das Anschweißen der wenigstens einen Kühlleitung an das Streckgitter nicht nötig ist. Dadurch wird das Herstellungsverfahren vereinfacht und somit die Kosten gesenkt. Zudem ist die Kühlleitung mit dem Streckgitter, dass zumindest ein Teil der Wärmeleitschicht ist, nicht nur entlang einer Linie von punktförmigen Schweißpunkten verbunden. Vielmehr ist es möglich, den mechanischen und damit auch den thermischen Kontakt großflächig herbeizuführen und damit die Wärmeleitung zwischen der wenigstens einen Kühlleitung und dem Streckgitter deutlich zu verbessern.

Besonders bevorzugt ist diese wenigstens eine Kühlleitung über zumindest einen Teil ihres Umfanges in das wenigstens eine Streckgitter eingerollt. Das Streckgitter folgt folglich der Kontur und der Form der Kühlleitung über einen Teil ihres Umfanges. Dadurch wird die Kontaktfläche zwischen dem Streckgitter und der wenigstens einen Kühlleitung weiter vergrößert und somit der thermische Kontakt und damit die Wärmeleitfähigkeit weiter verbessert. Das Einrollen der Kühlleitung in das Streckgitter kann beispielsweise über einen Rollformprozess geschehen.

Vorzugsweise ist die wenigstens eine Kühlleitung zumindest abschnittsweise ein abgeflachtes Rohr, das bevorzugt mit der abgeflachten Seite an dem wenigstens einen Photovoltaikelement angeordnet ist. Auch dies hat mehrere Vorteile. Durch die Positionierung der abgeflachten Kühlleitung mit der flachen Seite an dem Photovoltaikelement kommt es hier zu einem großflächigen Kontakt und damit einer sehr guten Wärmeübertragung. Zudem kann der Runde Bereich des Querschnitts der wenigstens einen Kühlleitung nahezu vollständig mit dem wenigstens einen Streckgitter umgeben sein. Auch auf diese Weise wird ein besonders guter thermischer Kontakt erreicht.

Bevorzugt bilden die Löcher des wenigstens einen Streckgitters mindestens 10 %, bevorzugt mindestens 20 %, besonders bevorzugt mindestens 30 % und höchstens 60 %, bevorzugt höchstens 50 %, besonders bevorzugt höchstens 40 % einer Gesamtfläche des wenigstens einen Streckgitters. Je größer der Anteil der Löcher an der Gesamtfläche des Streckgitters ist, desto geringer ist das Gewicht der Wärmeleitschicht und damit des Solarmoduls. Zudem sind die durch Wärmeausdehnung auftretenden Verformungen innerhalb der Wärmeleitschicht geringer, da weniger Material des Streckgitters vorhanden ist, das sich ausdehnen könnte. Je kleiner der Anteil der Löcher an der Gesamtfläche des Streckgitters hingegen ist, desto besser ist der Kontakt zwischen dem Photovoltaikelement und der Wärmeleitschicht sowie zwischen der wenigstens einen Kühlleitung und der Wärmeleitschicht.

Streckgitter sind aus dem Stand der Technik mit unterschiedlichen Ausgestaltungen von Löchern bekannt. Die Löcher des Streckmetalls, die auch als Maschen bezeichnet werden, können beispielsweise als Rautenmasche, Langstegmasche, Sechseckmasche, Rundmasche, Quadratmasche, Rechteckmasche oder Sondermasche vorliegen. Bevorzugt sind einige, besonders bevorzugt jedoch alle diese Löcher in einem regelmäßigen Muster, bevorzugt in parallel versetzt zueinander verlaufenden Reihen angeordnet. Auf diese Weise ist gewährleistet, dass zwischen den Reihen der Löcher Materialstreifen angeordnet sind, die in gerader Linie auf die wenigstens eine Kühlleitung zulaufen. Die Wärme, die durch das Streckgitter transportiert wird, kann entlang dieser Materialstreifen auf kürzestem Wege zu der wenigstens einen Kühlleitung geleitet werden.

Vorzugsweise haben zumindest einige der Löcher, bevorzugt jedoch alle Löcher in einer ersten Richtung eine größere Ausdehnung und Erstreckung als in einer zweiten Richtung, die senkrecht auf der ersten Richtung steht. Dies ist beispielsweise bei Rautenmaschen, Langstegmaschen, Rechteckmaschen und verschiedenen Sondermaschen der Fall. Bevorzugt sind diese Löcher so angeordnet, dass die zweite Richtung, in der die Löcher die kleinere Erstreckung haben, parallel zur wenigstens einen Kühlleitung verläuft. Dies bedeutet umgekehrt, dass die erste Richtung, in der die Löcher die größere Erstreckung haben, senkrecht zur Kühlleitung verlaufen.

Mit Hilfe der beiliegenden Figuren wird nachfolgend ein Ausführungsbeispiel der vorliegenden Erfindung näher erläutert.

Es zeigt
- Figur 1 -: Die Draufsicht und zwei Seitenansichten eines Streckgitters,
- Figur 2 -: eine schematische Schnittdarstellung durch ein Solarmodul gemäß einem Ausführungsbeispiel der vorliegenden Erfindung und
- Figur 3 -: einen vergrößerten Ausschnitt aus Figur 2.

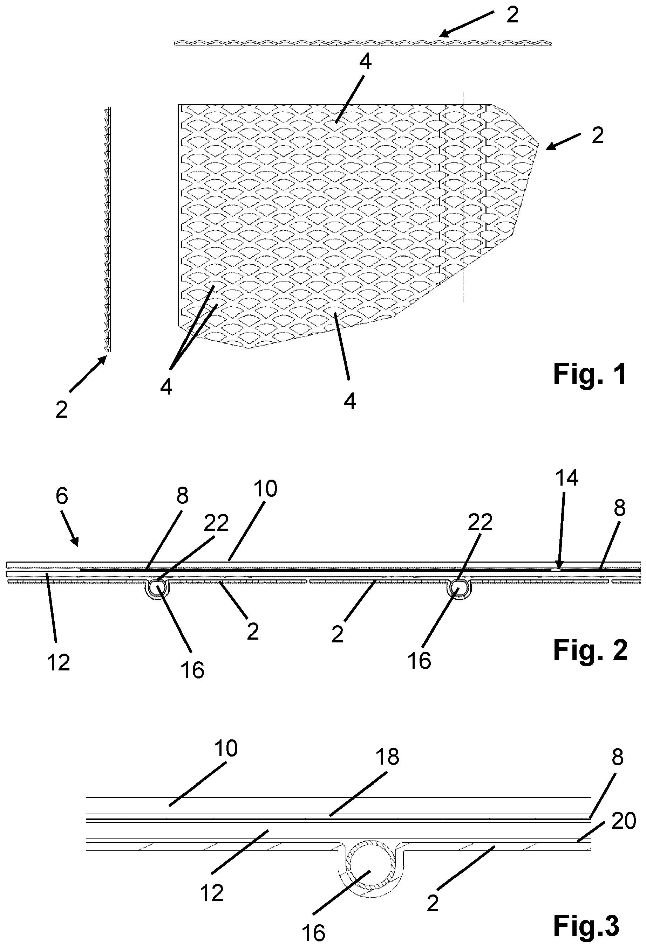

Figur 1 zeigt ein Streckgitter 2, wie es bei einem Solarmodul gemäß einem Ausführungsbeispiel der vorliegenden Erfindung verwendet werden kann. Man erkennt eine Reihe von Löchern 4, die im gezeigten Ausführungsbeispiel in Form von leicht gestauchten Viertelkreisen ausgebildet sind. Sie sind in einem regelmäßigen Muster aus parallel verlaufenden Linien angeordnet, wobei die einzelnen Löcher 4 benachbarter Linien versetzt zueinander angeordnet sind. Oberhalb und links des in Figur 1 gezeigten Streckgitters 2 sind Seitenansichten in der jeweiligen Richtung dargestellt. Man erkennt, dass das Streckgitter 2 eine dreidimensionale Struktur darstellt und insbesondere über regelmäßig angeordnete Erhebungen verfügt. Dehnt sich dieses Streckgitter 2 beispielsweise aufgrund von Wärmeeinwirkung aus, so verändert sich die Kontur und geometrische Form des Streckgitters 2 selbst kaum, optimalerweise gar nicht, sondern die durch die Wärmeausdehnung hervorgerufenen Materialausdehnungen werden in Form von Veränderungen der Lochgeometrie und Form der Löcher 4 vorgenommen.

Figur 2 zeigt eine schematische Schnittdarstellung durch ein Solarmodul 6 gemäß einem Ausführungsbeispiel der vorliegenden Erfindung. Ein Photovoltaikelement 8 ist von einer oberen Glasscheibe 10 abgedeckt, wodurch das empfindliche Photovoltaikelement 8 gegen mechanische Beanspruchung von außen geschützt wird. Unterhalb des in Figur 2 gezeigten Photovoltaikelementes 8 befindet sich eine untere Abdeckung 12, die beispielsweise ebenfalls in Form einer Glasplatte oder einer Folie ausgebildet sein kann. Man erkennt in Figur 2 einen Zwischenraum 14, durch den zwei benachbarte Photovoltaikelemente 8 voneinander getrennt sind.

Unterhalb der unteren Abdeckung 12 sind in Figur 2 zwei Kühlleitungen 16 dargestellt, die an der unteren Abdeckung 12 anliegen und über zwei Streckgitter 2 befestigt sind.

Figur 3 zeigt einen vergrößerten Ausschnitt aus Figur 2 und eine detailliertere Darstellung. Das Photovoltaikelement 8 wird durch die obere Glasscheibe 10 abgedeckt, wobei in der in Figur 3 gezeigten Ausführungsform ein oberer Zwischenraum 18, der beispielsweise mit einer Laminierfolie oder Silikon gefüllt sein kann, zwischen der oberen Glasscheibe 10 und dem Photovoltaikelement 8 angeordnet ist. Das Photovoltaikelement 8 liegt auf der unteren Abdeckung 12 auf, an deren Unterseite sich eine Schicht eines Klebers 20 befindet. Über diesen Kleber 20 ist das Streckgitter 2 an der vom Photovoltaikelement 8 abgewandten Seite der unteren Abdeckung 12 angeordnet. Zwischen dem Streckgitter 2 und der unteren Abdeckung 12 verläuft eine der gezeigten Kühlleitungen 16, die, anders als in Figur 2 dargestellt, einen kreisförmigen Querschnitt aufweist. Die Kühlleitungen 16 in Figur 2 verfügen an ihrer der unteren Abdeckung 12 zugewandten Seite über eine Abflachung 22.

Die in Figur 3 gezeigte Kühlleitung 16 wird von dem Streckgitter 2 auf allen der unteren Abdeckung 12 abgewandten Seiten umgeben, wobei das Streckgitter 2 an der Kühlleitung 16 anliegt. Dies kann beispielweise auf besonders einfache Weise dadurch erreicht werden, dass die Kühlleitung 16 soweit wie nötig in das Streckgitter 2 eingerollt wird. Dadurch kommt es zu einem besonders großflächigen Kontakt zwischen dem Streckgitter 2 und der Kühlleitung 16 und damit zu einem guten thermischen Kontakt.

Im Betrieb tritt Sonnenlicht durch die obere Glasscheibe 10 in das Solarmodul 6 ein und trifft auf das Photovoltaikelement 8, wobei elektrischer Strom erzeugt wird. Ein Teil des einfallenden Sonnenlichtes wird jedoch in Wärmeenergie umgesetzt, sodass sich das Solarmodul 6 erwärmt. Dadurch kann der Wirkungsgrad des Photovoltaikelementes 8 abnehmen. Die Wärme wird durch die untere Abdeckung 12 und den Kleber 20 in das Streckgitter 2 eingeleitet. Durch die Kühlleitungen 16 fließt ein in Figur 2 und 3 nicht dargestelltes Kühlmittel, wodurch Wärme abtransportiert wird. Es entsteht eine Wärmesenke, sodass die in dem Streckgitter 2 enthaltene Wärme zu dieser Wärmesenke, also der Kühlleitung 16, fließt.

### Bezugszeichenliste

- 2: Streckgitter
- 4: Loch
- 6: Solarmodul
- 8: Photovoltaikelement
- 10: obere Glasscheibe
- 12: untere Abdeckung
- 14: Zwischenraum
- 16: Kühlleitung
- 18: oberer Zwischenraum
- 20: Kleber
- 22: Abflachung

## Patentansprüche

1. Solarmodul (6) mit
- wenigstens einem Photovoltaikelement (8),
- wenigstens einer Wärmeleitschicht, die mit dem wenigstens einen Photovoltaikelement (8) in thermischem Kontakt steht, und
- wenigstens einer Kühlleitung (16), die mit der wenigstens einen Wärmeleitschicht in thermischem Kontakt steht,
**dadurch gekennzeichnet, dass**
die wenigstens eine Wärmeleitschicht wenigstens ein metallisches Streckgitter (2) mit einer Mehrzahl von Löchern (4) aufweist.

2. Solarmodul (6) nach Anspruch 1, **dadurch gekennzeichnet, dass** das wenigstens eine Streckgitter (2) eine Dicke von mindestens 0,5 mm, bevorzugt mindestens 0,6 mm, besonders bevorzugt mindestens 0,75 mm aufweist.

3. Solarmodul (6) nach Anspruch 1 oder 2, **dadurch gekennzeichnet, dass** die wenigstens eine Wärmeleitschicht an dem wenigstens einen Photovoltaikelement (8) angeklebt ist.

4. Solarmodul (6) nach einem der vorstehenden Ansprüche, **dadurch gekennzeichnet, dass** die wenigstens eine Kühlleitung (16) zumindest abschnittsweise zwischen dem wenigstens einen Photovoltaikelement (8) und der wenigstens einen Wärmeleitschicht angeordnet ist.

5. Solarmodul (6) nach Anspruch 4, **dadurch gekennzeichnet, dass** die wenigstens eine Kühlleitung (16) über einen Teil ihres Umfanges in das wenigstens eine Streckgitter (2) eingerollt ist.

6. Solarmodul (6) nach Anspruch 5, **dadurch gekennzeichnet, dass** die wenigstens eine Kühlleitung (16) zumindest abschnittsweise ein abgeflachtes Rohr ist, das bevorzugt mit einer abgeflachten Seite an dem wenigstens einen Photovoltaikelement (8) angeordnet ist.

7. Solarmodul (6) nach einem der vorstehenden Ansprüche, **dadurch gekennzeichnet, dass** die Löcher (4) des wenigstens einen Streckgitters (2) mindestens 10%, bevorzugt mindestens 20%, besonders bevorzugt mindestens 30% und höchstens 60%, bevorzugt höchstens 50%, besonders bevorzugt höchstens 40% einer Gesamtfläche des wenigstens einen Streckgitters (2) bilden.

8. Solarmodul (6) nach einem der vorstehenden Ansprüche, **dadurch gekennzeichnet, dass** zumindest einige, bevorzugt alle Löcher (4) in einem regelmäßigen Muster, bevorzugt in parallel zueinander verlaufenden Reihen, angeordnet sind.

9. Solarmodul (6) nach einem der vorstehenden Ansprüche, **dadurch gekennzeichnet, dass** zumindest einige, bevorzugt alle Löcher (4) in einer ersten Richtung eine größere Erstreckung aufweisen als in einer zweiten Richtung, die senkrecht auf der ersten Richtung steht, wobei die Löcher (4) vorzugsweise so angeordnet sind, dass die zweite Richtung parallel zu der wenigstens einen Kühlleitung (16) verläuft.

## Claims

1. A solar module (6) with
- at least one photovoltaic element (8),
- at least one thermal conduction layer that is in thermal contact with the at least one photovoltaic element (8), and
- at least one cooling duct (16) that is in thermal contact with the at least one thermal conduction layer,
**characterised in that**
the at least one thermal conduction layer comprises at least one metal expanded grate (2) with a plurality of holes (4).

2. The solar module (6) according to claim 1, **characterised in that** the at least one expanded grate (2) has a thickness of at least 0.5 mm, preferably at least 0.6 mm, particularly preferably at least 0.75 mm.

3. The solar module (6) according to claim 1 or 2, **characterised in that** the at least one thermal conduction layer is stuck on the at least one photovoltaic element (8).

4. The solar module (6) according to one of the preceding claims, **characterised in that** the at least one cooling duct (16) is arranged at least in sections between the at least one photovoltaic element (8) and the at least one thermal conduction layer.

5. The solar module (6) according to claim 4, **characterised in that** the at least one cooling duct (16) is rolled over a part of its circumference into the at least one expanded grate (2).

6. The solar module (6) according to claim 5, **characterised in that** the at least one cooling duct (16) is at least in sections a flattened tube, which is preferably arranged with a flattened side on the at least one photovoltaic element (8).

7. The solar module (6) according to one of the preceding claims, **characterised in that** the holes (4) of the at least one expanded grate (2) form at least 10%, preferably at least 20%, particularly preferably at least 30% and at most 60%, preferably at most 50%, particularly preferably at most 40% of a total area of the at least one expanded grate (2).

8. The solar module (6) according to one of the preceding claims, **characterised in that** at least some, but preferably all, holes (4) are arranged in a regular pattern, preferably rows that run parallel to each other.

9. The solar module (6) according to one of the preceding claims, **characterised in that** at least some, but preferably all, holes (4) feature a greater extension in a first direction than in a second direction that is perpendicular to the first direction, the holes (4) preferably being arranged such that the second direction runs parallel to the at least one cooling duct (16).

## Revendications

1. Module solaire (6) comprenant
- au moins un élément photovoltaïque (8),
- au moins une couche thermoconductrice, qui est en contact thermique avec ledit au moins un élément photovoltaïque (8), et
- au moins une conduite de refroidissement (16) qui est en contact thermique avec ladite au moins une couche thermoconductrice,
**caractérisé en ce que**
ladite au moins une couche thermoconductrice présente au moins un treillis déployé métallique (2) ayant une pluralité de trous (4).

2. Module solaire (6) selon la revendication 1,
**caractérisé en ce que** ledit au moins un treillis déployé (2) présente une épaisseur d'au moins 0,5 mm, de préférence d'au moins 0,6 mm, de manière particulièrement préférée d'au moins 0,75 mm.

3. Module solaire (6) selon la revendication 1 ou 2,
**caractérisé en ce que** ladite au moins une couche thermoconductrice est collée audit au moins un élément photovoltaïque (8).

4. Module solaire (6) selon l'une des revendications précédentes,
**caractérisé en ce que** ladite au moins une conduite de refroidissement (16) est disposée au moins localement entre ledit au moins un élément photovoltaïque (8) et ladite au moins une couche thermoconductrice.

5. Module solaire (6) selon la revendication 4,
**caractérisé en ce que** ladite au moins une conduite de refroidissement (16) est enroulée sur une partie de sa circonférence dans ledit au moins un treillis déployé (2).

6. Module solaire (6) selon la revendication 5,
**caractérisé en ce que** ladite au moins une conduite de refroidissement (16) est au moins localement un tube aplati qui est disposé de préférence avec un côté aplati sur ledit au moins un élément photovoltaïque (8).

7. Module solaire (6) selon l'une des revendications précédentes,
**caractérisé en ce que** les trous (4) dudit au moins un treillis déployé (2) forment au moins 10 %, de préférence au moins 20 %, de manière particulièrement préférée au moins 30 % et au plus 60 %, de préférence au plus 50 %, de manière particulièrement préférée au plus 40 % d'une surface totale dudit au moins un treillis déployé (2).

8. Module solaire (6) selon l'une des revendications précédentes,
**caractérisé en ce qu'**au moins certains trous, de préférence tous les trous (4) sont disposés selon un motif régulier, de préférence en rangées parallèles les unes aux autres.

9. Module solaire (6) selon l'une des revendications précédentes,
**caractérisé en ce qu'**au moins certains trous, de préférence tous les trous (4) ont une extension plus grande dans une première direction que dans une deuxième direction perpendiculaire à la première direction, les trous (4) étant de préférence disposés de telle sorte que la deuxième direction est parallèle à ladite au moins une conduite de refroidissement (16).
